# EUROPÄISCHE PATENTSCHRIFT

(11) **EP 0 970 313 B1**
(45) Veröffentlichungstag und Bekanntmachung des Hinweises auf die Patenterteilung: **28.11.2001**
(21) Anmeldenummer: 98945098.6
(22) Anmeldetag: 25.07.1998
(51) Int. Cl.: F16B 37/02

(54) **LÖSBARE FEDERMUTTER FÜR GEWINDEBOLZEN**
DETACHABLE SPRING NUTS FOR THREADED BOLTS
ECROU A RESSORT AMOVIBLE POUR BOULON FILETE

(30) Priorität: 05.08.1997 DE 19733771
(43) Veröffentlichungstag der Anmeldung: 12.01.2000
(73) Patentinhaber: A. Raymond & Cie, F-38028 Grenoble-Cédex (FR)
(72) Erfinder: GOLCZYK, Ralph, D-79639 Grenzach-Wyhlen (DE)
(74) Vertreter: Kirchgaesser, Johannes, Dipl.-Ing.
(86) Internationale Anmeldenummer: EP9804686
(87) Internationale Veröffentlichungsnummer: WO9908006

(56) Entgegenhaltungen:
- DE-A- 3 913 354
- US-A- 2 236 929
- US-A- 2 259 425
- US-A- 3 212 391

## Beschreibung

Die Erfindung betrifft eine lösbare Federmutter zur Befestigung auf einem Gewindebolzen. In der Praxis verwendete Federmuttern bestehen aus einer Auflageplatte mit einem zentralen Durchgangsloch für den Gewindebolzen sowie aus mindestens zwei zur Mitte weisenden Federlappen, welche mit dem Gewindeschaft bogenförmig angepaßten Stützkanten versehen sind siehe z.B. DE-A-3 913 354. Diese Federmuttern dienen im Kfz.-Bau beispielsweise zum Befestigen von Dämmatten oder Abschirmblechen und werden vorzugsweise dort verwendet, wo wegen des Auftretens hoher Temperaturen die Verwendung von Kunststoffmuttern ausscheidet.

Zum Aufdrehen der Federmuttern von Hand und Anziehen mittels eines Maulschlüssels sind vom Rand der Auflageplatte mehrere flache Schlüsselstege rechtwinklig hochgebogen, von denen jeweils zwei gegenüberliegende Stege parallel zueinander angeordnet sind.

Bei entsprechend elastischer Ausbildung der Federlappen ist es zwar möglich, die Federmuttern auf den Gewindebolzen aufzudrücken und so die meisten Gewindegänge zu überspringen. Um die gewünschte, feste Auflage der Federmuttern zu erreichen, muß die Federmutter jedoch noch nachgedreht bzw. angezogen werden, wodurch zusätzliche Montagezeit benötigt wird.

Aufgabe der Erfindung ist es, die Federmutter so zu gestalten, daß sie ohne zusätzliches Nachdrehen lediglich durch Aufdrücken die gewünschte volle Anlage auf der zu befestigenden Platte erhält. Dies wird bei der vorgenannten Federmutter durch die im Anspruch 1 angegebene Anordnung der Federlappen auf einer Zwischenplatte sowie deren federnde Abstützung auf der Auflageplatte erreicht, wobei gemäß Anspruch 2 die zusammendrückbaren Federwege der Stützkanten und des Federsteges zusammengenommen mindestens so groß sind wie die Gewindehöhe des Gewindebolzens.

Durch entsprechende Ausbildung der Schlüsselstege nach Anspruch 3 ist es ferner möglich, die Federmuttern aufeinanderzustapeln und damit in Magazinen aufzubewahren bzw. aus diesen einzeln abzuziehen.

Weitere Ausgestaltungsmerkmale der Erfindung ergeben sich aus den Unteransprüchen. Ein Ausführungsbeispiel der Erfindung ist in der Zeichnung dargestellt und soll nachfolgend näher beschrieben werden. Es zeigt:
- Fig. 1: die erfindungsgemäße Federmutter in Draufsicht,
- Fig. 2: die gleiche Federmutter in Seitenansicht,
- Fig. 3: die zur Herstellung der Federmutter ausgestanzte Platine
- Fig. 4: die Montagesituation beim Aufdrücken der Federmuttem und
- Fig. 5: mehrere übereinandergestapelte Federmuttern.

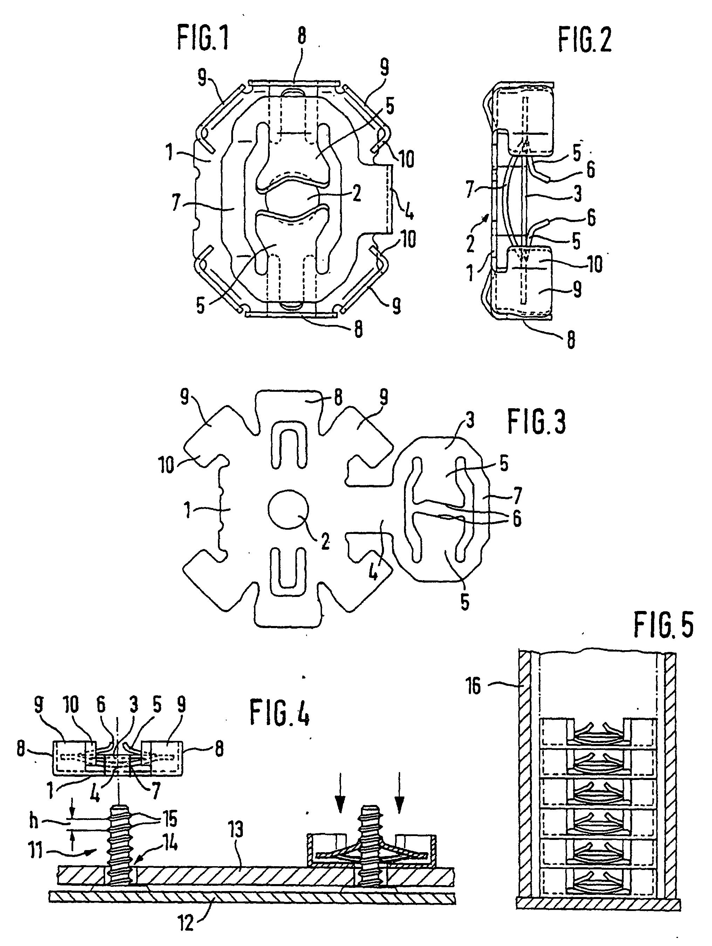

Die in den Figuren dargestellte Federmutter besteht aus einer Auflageplatte **1** mit einem zentralen Durchgangsloch **2** sowie einer Zwischenplatte **3,** die mit der Auflageplatte **1,** wie aus der Platinendarstellung in Figur 3 ersichtlich, über einen Steg **4** verbunden ist.

Aus der Zwischenplatte **3** sind zwei zur Mitte weisende Federlappen **5** mit bogenförmig ausgebildeten Stützkanten **6** ausgestanzt, welche sich am hochgebogenen Ende der Federlappen **5** befinden und zur Anlage an den Gewindeflanken **15** eines Gewindebolzens **11** bestimmt sind.

An der vom Verbindungssteg **4** abgewandten Seite der Zwischenplatte **3** ist ferner ein schmaler Federsteg **7** ausgestanzt, welcher - von den Federlappen **5** aus gesehen - unterhalb der Zwischenplatte **3** bogenförmig ausgedrückt ist. Die Zwischenplatte **3** ist nach Ausformung der Federlappen **5** und des Federsteges **7** über dem Verbindungssteg **4** in eine etwa parallele Lage zur Auflageplatte **1** herumgebogen, wobei der Federsteg **7** auf der Auflageplatte **1** federnd abgestützt ist.

Wie aus Figur 3 ersichtlich, sind am Rand der Auflageplatte **1** gegenüberliegend je drei Schlüsselstege **8** und **9** angeformt, welche bei der fertig geformten Federmutter gemäß Figuren 1 und 2 um die Zwischenplatte **3** herum rechtwinklig hochgebogen sind. Diese Schlüsselstege 8 und 9 sind jeweils paarweise parallel zueinander ausgerichtet und bilden miteinander einen Winkel zwischen **45°** und **60°,** so daß die Federmuttern mittels eines üblichen Maulschlüssels losgedreht werden können.

Um die Federmuttern in einem Magazin **16** stapeln zu können ( Figur 5 ), liegen die Oberkanten der Schlüsselstege **8** und **9** auf einer Ebene parallel zur Auflageplatte **1** und haben mindestens die gleiche Höhe über der Auflageplatte **1** wie die Federlappen **5.** Außerdem besitzen die jeweils äußeren Stege **9** an ihren freien Enden zur Plattenmitte abgewinkelte Ansätze **10,** welche den Rand der Auflageplatte **1** überdecken. Dadurch können die Federmuttern sauber aufeinandergestapelt und zum Setzen seitlich aus dem Magazin **16** herausgedrückt werden.

Figur 4 zeigt anschaulich die Montagesituation beim Aufdrücken der Federmutter auf einen Gewindebolzen **11,** welcher an einer Trägerplatte **12** in bekannter Weise befestigt ist. Auf der Trägerplatte **12** soll eine weitere Platte **13** ( beispielsweise eine Dämmplatte ) mittels der Federmuttern befestigt werden. Die Dämmplatte **13** ist zu diesem Zweck mit Aussparungen **14** versehen, in welche die Gewindebolzen **11** sich beim Auflegen der Platte **13** leicht einführen lassen.

Beim Andrücken der Federmuttern rutschen die Federlappen **5** über die Gewindeflanken **15** des Gewindebolzens **11,** bis die Auflageplatte **1** auf der Dämmplatte **13** aufliegt. Nun kann die Federmutter unter elastischer Verbiegung des Federsteges **7** und der Federlappen **5 -** wie im rechten Bild von Figur **4** ersichtlichsoweit heruntergedrückt werden, bis die Stützkanten **6** unterhalb einer Gewindeflanke einrasten. Die Federmutter ist hierbei im Schnitt dargestellt, so daß der vor der Zwischenplatte **3** befindliche, flachgedrückte Federsteg **7** nicht zu erkennen ist. Damit die Federmutter nach dem Einrasten der Federlappen **5** mit ausreichender Vorspannung auf die Dämmplatte **13** drückt, müssen die zusammendrückbaren Federwege der Stützkanten **6** und des heruntergebogenen Federsteges **7** zusammengenommen, mindestens so groß sein wie die Gewindehöhe **h** des Gewindebolzens **11**.

Will man die Dämmplatte **13** entfemen, so läßt sich die Federmutter mittels eines Maulschlüssels wieder lösen.

## Patentansprüche

1. **Lösbare Federmutter** zur Befestigung auf einem Gewindebolzen, bestehend aus einer **Auflageplatte** (1) mit einem zentralen Durchgangsloch ( 2) sowie zwei zur Mitte weisenden **Federlappen** ( 5 ) mit bogenförmig ausgebildeten Stützkanten ( 6 ), wobei vom Rand der Auflageplatte ( 1 ) mehrere Schlüsselstege ( 8,9 ) rechtwinklig hochgebogen sind, **dadurch gekennzeichnet, daß** die Federlappen ( 5 ) auf einer **Zwischenplatte** ( 3 ) angeformt sind, welche mit der Auflageplatte ( 1 ) über einen Steg ( 4) verbunden und in eine etwa parallele Lage zur Auflageplatte (1) umgebogen ist, und daß an der vom Verbindungssteg ( 4 ) abgewandten Seite der Zwischenplatte ( 3 ) ein schmaler Federsteg ( 7 ) ausgestanzt und unterhalb der Zwischenplatte ( 3 ) bogenförmig derart ausgedrückt ist, daß der Federsteg ( 7) auf der Auflageplatte (1) federnd abstützbar ist.

2. Lösbare Federmutter nach Anspruch 1, **dadurch gekennzeichnet, daß** die in Richtung der Zwischenplatte ( 3 ) zusammendrückbaren **Federwege** der Stützkanten ( 6 ) und des heruntergebogenen Federsteges ( 7 ) zusammengenommen mindestens so groß sind wie die **Gewindehöhe** ( h ) des Gewindebolzens (11).

3. Lösbare Federmutter nach Anspruch 1 oder 2, **dadurch gekennzeichnet, daß** die Oberkanten der Schlüsselstege ( 8,9 ) auf einer Ebene parallel zur Auflageplatte ( 1 ) liegen und mindestens die gleiche Höhe über der Auflageplatte (1) haben wie die Stützkanten (6) der Federlappen (5).

4. Lösbare Federmutter nach Anspruch 3, **dadurch gekennzeichnet, daß** beiderseits der Federlappen ( 5 ) je drei Schlüsselstege ( 8,9 ) vorgesehen sind, welche miteinander einen Winkel zwischen 45 und 60 Grad bilden, wobei die jeweils äußeren Stege ( 9 ) an ihren freien Enden zur Plattenmitte abgewinkelte Ansätze (10) besitzen, welche den Rand der Auflageplatte (1) überdecken.

## Claims

1. A releasable spring nut for fixing on a screwthreaded bolt, comprising a support plate (1) with a central hole (2) therethrough and two spring lugs (5) which face towards the centre, with support edges (6) of an arcuate configuration, wherein a plurality of spanner arms (8, 9) are bent up at a right angle from the edge of the support plate (1), **characterised in that** the spring lugs (5) are formed on an intermediate plate (3) which is connected to the support plate (1) by way of an arm (4) and is bent over into a substantially parallel position with respect to the support plate (1), and that, at the side of the intermediate plate (3) remote from the connecting arm (4), a narrow spring arm (7) is stamped out and pressed out beneath the intermediate plate (3) in an arcuate shape in such a way that the spring arm (7) can be resiliently supported on the support plate (1).

2. A releasable spring nut according to claim 1 **characterised in that** the spring travels, which can be compressed in the direction of the intermediate plate (3), of the support edges (6) and the downwardly bent spring arm (7) are together at least as great as the screwthread height (h) of the screwthreaded bolt (11).

3. A releasable spring nut according to claim 1 or claim 2 **characterised in that** the upper edges of the spanner arms (8, 9) are on a plane parallel to the support plate (1) and are at least the same height above the support plate (1) as the support edges (6) of the spring lugs (5).

4. A releasable spring nut according to claim 3 **characterised in that** provided on each of the two sides of the spring lugs (3) are three respective spanner arms (8, 9) which form an angle of between 45 and 60° to each other, wherein at their free ends the respective outer arms (9) have projections (10) which are angled towards the centre of the plate and which overlap the edge of the support plate (1).

## Revendications

1. Agrafe élastique amovible destinée à être fixée sur un goujon fileté, se composant d'une plaque d'assise (1) comportant, en sa partie centrale, un orifice de passage (2) ainsi que de deux languettes élastiques (5) orientées vers le centre, comportant des arêtes d'appui (6) présentant une configuration en arc de cercle, plusieurs barrettes de protection (8; 9) étant en l'occurrence repliées vers le haut selon une disposition en angle droit, **caractérisée en ce que** les languettes élastiques (5) sont réalisées par formage solidaires d'une plaque intermédiaire (3) qui est reliée par une barrette entretoise (4) à la plaque d'assise (1) et qui est cintrée selon une orientation sensiblement parallèle au plan de la plaque d'assise (1) et **en ce que**, sur le côté orienté à l'opposé de la barrette entretoise de liaison (4) de la plaque intermédiaire (3), une mince barrette élastique (7) est réalisée par découpage à la presse et repoussée en forme de cintre sous la plaque intermédiaire (3) dans des conditions telles que la barrette élastique (7) est susceptible de prendre appui sur la plaque d'assise (1) en réagissant de manière élastique.

2. Agrafe élastique amovible selon la revendication 1, **caractérisée en ce que** la valeur des courses de réaction élastique de compression dans la direction de la plaque intermédiaire (3) des arêtes d'appui (6) et de la barrette élastique repliée vers le bas (7), considérées ensemble, est au moins égale au pas de filetage (h) du goujon fileté (11).

3. Agrafe élastique amovible selon la revendication 1 ou 2, **caractérisée en ce que** les arêtes supérieures des barrettes de protection (8, 9) se situent dans un plan parallèle à celui de la plaque d'assise (1) et **en ce que** leur hauteur au-dessus de la plaque d'assise (1) est au moins égale à celle des arêtes d'appui (6) des languettes élastiques (5).

4. Agrafe élastique amovible selon la revendication 3, **caractérisée en ce qu'**il est prévu, de part et d'autre des languettes élastiques (5), respectivement trois barrettes de protection (8, 9) qui forment ensemble un angle se situant entre 45 et 60 degrés, les barrettes respectivement extérieures (9) comportant, au niveau de leurs extrémités libres, des parties en saillie (10) repliées suivant une disposition angulaire en direction du centre de la plaque, qui recouvrent le bord de la plaque d'assise (1)
